# EUROPEAN PATENT APPLICATION

(11) **EP 4 794 050 A1**
(43) Date of publication of application: **19.08.2026**
(21) Application number: 25858671.8
(22) Date of filing: 30.06.2025
(51) Int. Cl.: H01M 10/0587

(54) **CYLINDRICAL BATTERY AND ELECTRONIC DEVICE**

(30) Priority: 29.08.2024 CN 202411203313
(71) Applicant: Ningde Amperex Technology Limited, Ningde, Fujian 352100 (CN)
(72) Inventor: WANG, Chen, Ningde, Fujian 352100 (CN); ZENG, Qiao, Ningde, Fujian 352100 (CN)
(74) Representative: Dehns Germany Partnerschaft mbB
(86) International application number: PCT/CN2025/105503
(87) International publication number: WO 2026/045625

(57) **Abstract**

This application discloses a cylindrical battery and an electronic device. The cylindrical battery includes a housing and an electrode assembly. The electrode assembly is disposed in the housing. The electrode assembly includes a first electrode plate. The first electrode plate includes a first blank foil portion. The first blank foil portion is formed of a first part and a second part. The first part extends along a winding direction of the electrode assembly. The second part is formed by bending the first blank foil portion toward such a direction that a terminating end of the first electrode plate is closer to a first end wall. The second part is connected to the first part and the first end wall of the housing. A region of connection between the second part and the first end wall is a first region. A first edge is formed at a junction between the first part and the second part. The first part includes a second edge and a third edge. The first edge intersects the third edge to form a first fold point. A minimum distance between the first end wall and the second end wall is H, an inner radius of a circumferential wall of the housing is R, and a minimum distance from the first fold point to the first region is L₁, satisfying H + R ≤ L₁. By providing the second part, this application improves the lifespan of the cylindrical battery.

## Description

### TECHNICAL FIELD

This application relates to the technical field of energy storage, and in particular, to a cylindrical battery and an electronic device.

### BACKGROUND

Currently, a cylindrical battery typically includes an electrode assembly and a housing. The electrode assembly is accommodated in the housing. The electrode assembly includes a positive electrode plate and a negative electrode plate. The positive electrode plate is fixed to the housing through an interconnecting piece, and the negative electrode plate is fixed to the housing through another interconnecting piece. During charging and discharging of a cylindrical battery, the electrode assembly repeatedly expands and contracts, causing the positive electrode plate and the negative electrode plate to be repeatedly stretched. This is prone to cause an electrode strip fracture and result in failure of the cylindrical battery.

### SUMMARY

In view of the above situation, it is necessary to provide a cylindrical battery and an electronic device that can reduce the probability of tearing or electrode strip fracture of an electrode assembly.

According to a first aspect, an embodiment of this application provides a cylindrical battery. The cylindrical battery includes a housing and an electrode assembly. The housing includes a first end wall, a second end wall, and a circumferential wall. The first end wall and the second end wall are disposed opposite to each other along a first direction. The circumferential wall connects the first end wall and the second end wall, and combines with the first end wall and the second end wall to jointly define a first space. The electrode assembly is disposed in the first space. The electrode assembly includes a first electrode plate, a second electrode plate, and a separator. The first electrode plate, the separator, and the second electrode plate are stacked up and then wound together to form a wound structure. A winding center axis of the electrode assembly lies in the first direction. The first electrode plate includes a first current collector and a first active material layer stacked up. The first current collector includes a first blank foil portion located at an outermost turn of the wound structure of the first electrode plate. The first blank foil portion is not covered by the first active material layer. The first blank foil portion is formed of a first part and a second part. The first part extends along a winding direction of the electrode assembly. The second part includes a terminating end of the first electrode plate. The second part is formed by bending the first blank foil portion. The terminating end of the first electrode plate is located between the first end wall and the electrode assembly. The second part is connected to the first part and the first end wall. A region of connection between the second part and the first end wall is a first region. A first edge is formed at a junction between the first part and the second part. The first part includes a second edge and a third edge opposite to each other along the first direction. The second edge is closer to the first end wall than the third edge. The first edge intersects the third edge to form a first fold point. A distance between the first end wall and the second end wall along the first direction is H. An inner radius of the circumferential wall is R. Along an extension direction of the second part, a minimum distance from the first fold point to the first region is L₁, satisfying H + R ≤ L₁.

In the cylindrical battery, the minimum distance from the first fold point to the first region is greater than a sum of the height of the electrode assembly along the first direction and the inner radius of the circumferential wall. When the electrode assembly expands in volume during charging and discharging, under the action of internal stress, the first part moves along an opposite direction of the winding direction of the electrode assembly, and drives the second part to move. In this way, the second part changes to a more tightly stretched state than the original state, thereby releasing at least a part of stress. This reduces the probability of tearing or strip fracture of the first electrode plate caused by the accumulation of internal stress, thereby improving the lifespan of the cylindrical battery.

In an optional embodiment of this application, a cross-section, perpendicular to the first direction, of the electrode assembly is annular in shape, an outer radius of the electrode assembly is R₁, and an inner radius of the electrode assembly is R₂, satisfying L₁ ≤ H + R + 30%π(R₁ + R₂). By defining L₁ ≤ H + R + 30%π(R₁ + R₂), this application prevents the part of the second part, which is located between the first end wall and the electrode assembly, from being excessively long, thereby reducing the risk that the second part squeezes the surface, facing the first end wall, of the electrode assembly and consequently induces a poor K value.

In an optional embodiment of this application, H + R + 10%π(R₁ + R₂) ≤ L₁ ≤ H + R + 20%π(R₁ + R₂). By defining L₁ ≥ H + R + 10%π(R₁ + R₂), this application further reduces the probability of tearing or strip fracture of the first electrode plate caused by accumulation of internal stress. By defining L₁ ≤ H + R + 20%π(R₁ + R₂), this application further reduces the risk that the second part squeezes the surface, facing the first end wall, of the electrode assembly and consequently induces a poor K value.

In an optional embodiment of this application, the cylindrical battery includes a first adhesive piece and a second adhesive piece. Both the first adhesive piece and the second adhesive piece are configured to bond the first part and the second part together. The first adhesive piece is bonded to surfaces of the first part and the second part, the surfaces facing the circumferential wall. The second adhesive piece is bonded to surfaces of the first part and the second part, the surfaces facing the winding center axis. The first adhesive piece covers at least a part of an edge of the first part and a part of an edge of the second part. The second adhesive piece covers at least a part of an edge of the first part and a part of an edge of the second part. The first adhesive piece and the second adhesive piece help maintain the stacked state of the first part and the second part along the thickness direction of the first electrode plate, improve the stability of the second part during connection to the first end wall, and facilitate operation of processing equipment. The second adhesive piece covers at least a part of the edge of the first part and a part of the edge of the second part. The first adhesive piece and the second adhesive piece help reduce the probability of the burrs on the edges of the first part and the second part piercing the separator and inducing an internal short circuit.

In an optional embodiment of this application, a projection of the second edge onto the second part along a thickness direction of the first electrode plate is a first projection line. The first adhesive piece includes a fourth edge. The fourth edge is disposed opposite to the first projection line along the first direction. The fourth edge is closer to the first region than the first projection line. A distance between the first projection line and the fourth edge along the extension direction of the second part is d₁, and a width of the first part along the first direction is W, satisfying 5%W ≤ d₁ ≤ 70%W. By defining d₁ ≥ 5%W, this application ensures that the coverage length by which the first adhesive piece covers the edge of the second part is not excessively short, thereby reducing the probability of the burrs on the edge of the second part piercing the separator. By defining d₁ ≤ 70%W, this application ensures that the distance between the first adhesive piece and the first region is not excessively short, thereby facilitating connection between the second part and the first end wall, and reducing the probability of poor connection between the second part and the first end wall caused by the presence of the first adhesive piece.

In an optional embodiment of this application, a projection of the second edge onto the second part along a thickness direction of the first electrode plate is a first projection line. The second adhesive piece includes a fifth edge. The fifth edge is disposed opposite to the first projection line along the first direction. The fifth edge is closer to the first region than the first projection line. A distance between the first projection line and the fifth edge along the extension direction of the second part is d₂, and a width of the first part along the first direction is W, satisfying 5%W ≤ d₂ ≤ 70%W. By defining d₂ ≥ 5%W, this application ensures that the coverage length by which the second adhesive piece covers the edge of the second part is not excessively short, thereby reducing the probability of the burrs on the edge of the second part piercing the separator. By defining d₂ ≤ 70%W, this application ensures that the distance between the second adhesive piece and the first region is not excessively short, thereby facilitating connection between the second part and the first end wall, and reducing the probability of poor connection between the second part and the first end wall caused by the presence of the second adhesive piece.

In an optional embodiment of this application, the second part includes a connecting portion and an interconnecting portion. The connecting portion and the first part are an integrally formed structure. The interconnecting portion is connected to the connecting portion, and the interconnecting portion is connected to the first end wall. A region of connection between the interconnecting portion and the first end wall is the first region, a region of connection between the connecting portion and the interconnecting portion is a second region, and the first region is spaced apart from the second region. The interconnecting portion improves the current-carrying capacity of the first electrode plate.

In an optional embodiment of this application, the interconnecting portion is welded to the connecting portion, and the interconnecting portion is welded to the first end wall. Along the extension direction of the second part, a minimum distance between the first region and the second region is L₂, satisfying 1/5R ≤ L₂ ≤ 3/5R. By defining L₂ ≥ 1/5R, this application prevents the distance between the first region and the second region from being excessively small, thereby reducing the probability of the interconnecting portion being damaged due to two welding processes. By defining L₂ ≤ 3/5R, this application prevents the distance between the first region and the second region from being excessively large, and prevents the length of the interconnecting piece from being excessively large, thereby reducing the probability of the interconnecting piece itself being stacked along the first direction, and consequently reducing the risk that the interconnecting portion squeezes the surface, facing the first end wall, of the electrode assembly and induces a poor K value.

In an optional embodiment of this application, the interconnecting portion is welded to the connecting portion. The cylindrical battery further includes a third adhesive piece. The third adhesive piece is configured to bond the connecting portion and the interconnecting portion together, and is located on one side of the connecting portion and the interconnecting portion, the side facing the wound structure. Along a thickness direction of the interconnecting portion, the third adhesive piece covers the second region. The third adhesive piece is spaced apart from the first region. Along the extension direction of the second part, a minimum distance between the third adhesive piece and the first region is L₃, satisfying 1/5R ≤ L₃ ≤ 2/5R. By providing the third adhesive piece, this application reduces the probability that a weld joint formed by the welding between the interconnecting portion and the connecting portion pierces the separator and induces a short circuit in the electrode assembly. By defining L₃ ≥ 1/5R, this application ensures that the distance between the third adhesive piece and the first region is not excessively small, thereby reducing the probability that the placement of the third adhesive piece affects effective electrical connection between the interconnecting portion and the first end wall. By defining L₃ ≤ 2/5R, this application ensures that the distance between the third adhesive piece and the first region is not excessively large, thereby increasing the coverage area of the third adhesive piece and improving the bonding stability of the third adhesive piece.

In an optional embodiment of this application, the second part is a folded structure. After a part of the first blank foil portion is bent toward a direction that brings the terminating end of the first electrode plate closer to the first end wall, the second part includes a sixth edge and a seventh edge opposite to each other along the winding direction of the electrode assembly. The sixth edge and the second edge are the same edge line of the first current collector. The seventh edge and the third edge are the same edge line of the first current collector. The folded structure is formed by bending a part of the first blank foil portion toward a direction that brings the terminating end of the first electrode plate closer to the first end wall and then folding the second part in such a way that the sixth edge is closer to the first part. A height of the electrode assembly along the first direction is h, satisfying h ≥ 4R/3. The formula h ≥ 4R/3 means that the width of the first electrode plate is greater than or equal to 4R/3. The second part is wider than the inner diameter of the circumferential wall. In the case that the projected area of the second region along the first direction remains constant, the second part is folded and then connected to the first end wall. Compared to the case in which the second part is not folded but is directly connected to the first end wall, this technical solution increases the proportion of a junction part of the second part between the second part and the first end wall in relation to the whole of the second part, thereby improving the stability of connection between the second part and the first end wall.

In an optional embodiment of this application, along a thickness direction of the first electrode plate, a part of the second part is located on one side of the first part, the side facing the circumferential wall; and a part of the second part is located on one side of the first part, the side facing a winding center of the electrode assembly. This helps reduce the resistance encountered by the first part due to the folded state of the second part when the first part drives the second part to move.

In an optional embodiment of this application, the second part includes a sixth edge and a seventh edge opposite to each other along the winding direction of the electrode assembly. The sixth edge and the second edge are the same edge line of the first current collector, the seventh edge and the third edge are the same edge line of the first current collector, and an angle between the first edge and the seventh edge is α, satisfying 40° ≤ α ≤ 70°. By defining α ≥ 40°, this application ensures that α is not excessively small, and makes it convenient for the first part to drive the second part to move. By defining α ≤ 70°, this application ensures that α is not excessively large, facilitates connection between the second part and the first end wall, and reduces the probability of an internal short circuit caused by insertion of a corner of an end portion of the second part into the wound structure of the electrode assembly, where the end portion of the second part is connected to the first end wall.

In an optional embodiment of this application, the second electrode plate includes a second current collector and a second active material layer stacked up. The second current collector includes a second blank foil portion located at an outermost turn of a wound structure of the second electrode plate. The second blank foil portion is not covered by the second active material layer. The second blank foil portion is formed of a third part and a fourth part. The third part extends along the winding direction of the electrode assembly. The fourth part includes a terminating end of the second electrode plate. The fourth part is formed by bending a part of the second blank foil portion toward a direction that brings the terminating end of the second electrode plate closer to the second end wall. The fourth part is connected to the third part and the second end wall. A region of connection between the fourth part and the second end wall is a third region. An eighth edge is formed at a junction between the third part and the fourth part. The third part includes a ninth edge and a tenth edge opposite to each other along the first direction. The tenth edge is closer to the first end wall than the ninth edge. The ninth edge intersects the eighth edge to form a second fold point. Along an extension direction of the fourth part, a minimum distance from the second fold point to the third region is L₄, satisfying H + R ≤ L₄. The minimum distance from the second fold point to the third region is greater than a sum of the height of the electrode assembly along the first direction and the inner radius of the circumferential wall. When the electrode assembly expands in volume during charging and discharging, under the action of internal stress, the third part moves along an opposite direction of the winding direction of the electrode assembly, and drives the fourth part to move. In this way, the fourth part changes to a more tightly stretched state than the original state, thereby releasing at least a part of stress. This reduces the probability of tearing or strip fracture of the second electrode plate caused by the accumulation of internal stress, thereby improving the lifespan of the cylindrical battery.

In an optional embodiment of this application, one of the first electrode plate or the second electrode plate is a negative electrode plate. The negative electrode plate includes a negative active material layer and a negative current collector stacked up. The negative active material layer includes silicon. Based on a mass of the negative active material layer, a mass percent of silicon is at least 3%. Compared with a silicon-free electrode plate, the silicon-containing electrode plate undergoes greater volume change and makes the electrode assembly generate greater internal stress during charging and discharging. By providing the second part, this application reduces the probability of tearing or strip fracture of the first electrode plate.

According to a second aspect, an embodiment of this application provides an electronic device. The electronic device includes the cylindrical battery disclosed in any one of the above embodiments.

### BRIEF DESCRIPTION OF DRAWINGS

FIG. 1 is a schematic structural diagram of a cylindrical battery according to an embodiment of this application;
FIG. 2 is a cross-sectional structural diagram of a cylindrical battery according to an embodiment of this application;
FIG. 3 is a schematic structural diagram of an electrode assembly according to an embodiment of this application;
FIG. 4 is a schematic structural diagram of a first electrode plate in one state according to an embodiment of this application;
FIG. 5 is a schematic structural diagram of a first electrode plate spread out and connected to a first end wall according to an embodiment of this application;
FIG. 6 is a schematic structural diagram of a cylindrical battery according to an embodiment of this application;
FIG. 7 is a schematic structural diagram of a first electrode plate spread out and connected to a first end wall according to a first embodiment of this application;
FIG. 8 is a schematic structural diagram of a second part in a folded state according to an embodiment of this application;
FIG. 9 is a schematic structural diagram of a second part before being folded according to an embodiment of this application;
FIG. 10 is a schematic structural diagram of a second part in a folded state according to an embodiment of this application;
FIG. 11 is a schematic structural diagram of a second part before being folded according to an embodiment of this application;
FIG. 12 is a schematic structural diagram of a second electrode plate connected to a second end wall in one state according to an embodiment of this application;
FIG. 13 is a schematic structural diagram of a second electrode plate connected to a second end wall in one state according to an embodiment of this application; and
FIG. 14 is a schematic structural diagram of an electronic device according to an embodiment of this application.

**List of reference signs:**

| | |
|---|---|
| cylindrical battery | 100 |
| housing | 10 |
| first end wall | 11 |
| first side | 111 |
| circumferential wall | 12 |
| second end wall | 13 |
| cover | 131 |
| electrode post | 132 |
| first segment | 1321 |
| second segment | 1322 |
| third segment | 1323 |
| second side | 13231 |
| insulation piece | 14 |
| first space | 15 |
| electrode assembly | 20 |
| first electrode plate | 21 |
| first current collector | 211 |
| first blank foil portion | 2111 |
| first part | 2112 |
| second edge | 21121 |
| first projection line | 21121a |
| third edge | 21122 |
| second part | 2113 |
| sixth edge | 21131 |
| seventh edge | 21132 |
| first edge | 2114 |
| first crease | 2114a |
| first fold point | 2114b |
| first region | 2115 |
| second crease | 2115a |
| connecting portion | 2116 |
| interconnecting portion | 2117 |
| second region | 2118 |
| third crease | 2118a |
| first active material layer | 212 |
| second electrode plate | 22 |
| second current collector | 221 |
| second active material layer | 222 |
| second blank foil portion | 2221 |
| third part | 2222 |
| ninth edge | 22221 |
| tenth edge | 22222 |
| fourth part | 2223 |
| eighth edge | 2224 |
| fourth crease | 2224a |
| second fold point | 2224b |
| third region | 2225 |
| separator | 23 |
| first adhesive piece | 30 |
| fourth edge | 31 |
| second adhesive piece | 40 |
| fifth edge | 41 |
| third adhesive piece | 50 |
| first interconnecting piece | 60 |
| first direction | X |

### DETAILED DESCRIPTION

The following describes the technical solutions in the embodiments of this application with reference to the drawings hereto. Evidently, the described embodiments are merely a part of but not all of the embodiments of this application.

It is noted that a component considered to be "connected to" another component may be directly connected to the other component or may be connected to the other component through an intermediate component. A component considered to be "disposed on" another component may be directly disposed on the other component or may be disposed on the other component through an intermediate component.

Unless otherwise defined, all technical and scientific terms used herein bear the same meanings as what is normally understood by a person skilled in the technical field of this application. The terms used in the specification of this application are merely intended to describe specific embodiments but not to limit this application.

In the description of embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

In the description of embodiments of this application, the term "perpendicular" or "vertical" is used to describe an ideal state between two components. In the actual production or use state, one component may be approximately perpendicular to another component. Two components described as "perpendicular" to each other may be not absolute straight lines or planes, but may be roughly straight lines or planes. An object is considered to be a "straight line" or "plane" if the overall extension direction of the object is a straight line or plane as viewed from a macro perspective.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. To the extent that no conflict occurs, different embodiments of this application may be combined with each other.

An embodiment of this application provides a cylindrical battery. The cylindrical battery includes a housing and an electrode assembly. The housing includes a first end wall, a second end wall, and a circumferential wall. The first end wall and the second end wall are disposed opposite to each other along a first direction. The circumferential wall connects the first end wall and the second end wall, and combines with the first end wall and the second end wall to jointly define a first space. The electrode assembly is disposed in the first space. The electrode assembly includes a first electrode plate, a second electrode plate, and a separator. The first electrode plate, the separator, and the second electrode plate are stacked up and then wound together to form a wound structure. A winding center axis of the electrode assembly lies in the first direction. The first electrode plate includes a first current collector and a first active material layer stacked up. The first current collector includes a first blank foil portion located at an outermost turn of the wound structure of the first electrode plate. The first blank foil portion is not covered by the first active material layer. The first blank foil portion is formed of a first part and a second part. The first part extends along a winding direction of the electrode assembly. The second part includes a terminating end of the first electrode plate. The second part is formed by bending the first blank foil portion. The terminating end of the first electrode plate is located between the first end wall and the electrode assembly. The second part is connected to the first part and the first end wall. A region of connection between the second part and the first end wall is a first region. A first edge is formed at a junction between the first part and the second part. The first part includes a second edge and a third edge opposite to each other along the first direction. The second edge is closer to the first end wall than the third edge. The first edge intersects the third edge to form a first fold point. A distance between the first end wall and the second end wall along the first direction is H. An inner radius of the circumferential wall is R. Along an extension direction of the second part, a minimum distance from the first fold point to the first region is L₁, satisfying H + R ≤ L₁.

In the cylindrical battery, the minimum distance from the first fold point to the first region is greater than a sum of the height of the electrode assembly along the first direction and the inner radius of the circumferential wall. When the electrode assembly expands in volume during charging and discharging, under the action of internal stress, the first part moves along an opposite direction of the winding direction of the electrode assembly, and drives the second part to move. In this way, the second part changes to a more tightly stretched state than the original state, thereby releasing at least a part of stress. This reduces the probability of tearing or strip fracture of the first electrode plate caused by the accumulation of internal stress, thereby improving the lifespan of the cylindrical battery.

The following further describes the embodiments of this application with reference to drawings.

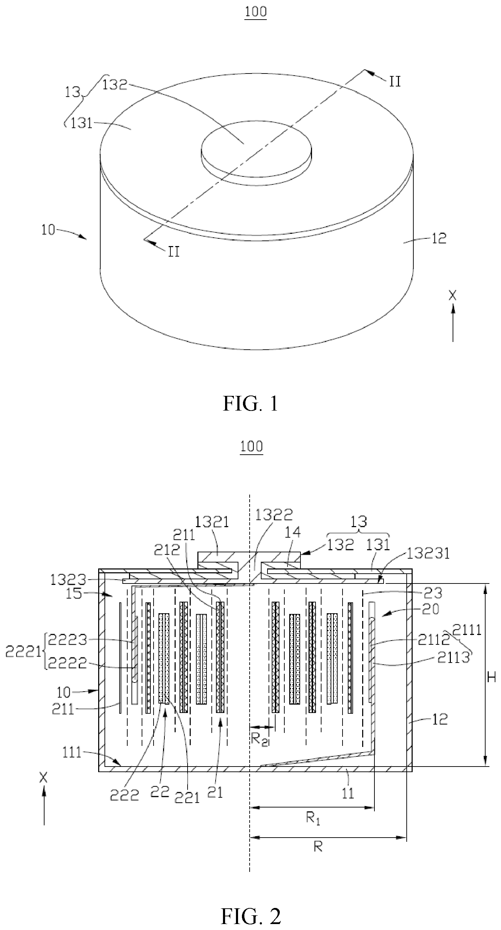

As shown in FIG. 1, an embodiment of this application provides a cylindrical battery 100.

In some embodiments, the cylindrical battery 100 is a button cell.

In some embodiments, as shown in FIG. 1 and 2, the cylindrical battery 100 includes a housing 10 and an electrode assembly 20. The electrode assembly 20 is accommodated in the housing 10.

In some embodiments, as shown in FIG. 2, the housing 10 includes a first end wall 11, a second end wall 13, and a circumferential wall 12. The first end wall 11 and the second end wall 13 are disposed opposite to each other along a first direction X. The circumferential wall 12 connects the first end wall 11 and the second end wall 13, and combines with the first end wall 11 and the second end wall 13 to jointly define a first space 15. The electrode assembly 20 is disposed in the first space 15.

It is noted that the first end wall 11, the second end wall 13, and the circumferential wall 12 mean imaginary division of the overall structure of the housing 10, but do not mean that the housing 10 is formed of the three independent components before the components are connected. For example, in some embodiments, the circumferential wall 12 and the first end wall 11 are an integrally formed structure.

In some embodiments, as shown in FIG. 2, the second end wall 13 includes a cover 131 and an electrode post 132. The electrode post 132 includes a first segment 1321, a second segment 1322, and a third segment 1323 that of an integral structure. The second segment 1322 is located between the first segment 1321 and the third segment 1323, and connects the first segment 1321 and the third segment 1323, making the electrode post 132 assume the shape of an "I". The cover 131 is provided with a through-hole in the middle. The second segment 1322 passes through the through-hole. The first segment 1321 is located outside the first space 15. The third segment 1323 is located inside the first space 15. An insulation piece 14 is disposed between the cover 131 and the electrode post 132. The insulation piece 14 is configured to insulate the cover 131 from the electrode post 132.

In some embodiments, as shown in FIG. 2, the electrode assembly 20 includes a first electrode plate 21, a second electrode plate 22, and a separator 23. The first electrode plate 21, the separator 23, and the second electrode plate 22 are stacked up and then wound together to form a wound structure. The winding center axis of the electrode assembly 20 lies in the first direction X.

In some embodiments, as shown in FIG. 2, the first electrode plate 21 includes a first current collector 211 and a first active material layer 212 that are stacked up. Specifically, two first active material layers 212 are disposed. The two first active material layers 212 are applied onto two opposite sides of the first current collector 211 along the thickness direction of the first electrode plate 21.

In some embodiments, as shown in FIG. 2, the second electrode plate 22 includes a second current collector 221 and a second active material layer 222 that are stacked up. Specifically, two second active material layers 222 are disposed. The two second active material layers 222 are applied onto two opposite sides of the second current collector 221 along the thickness direction of the second electrode plate 22.

In some embodiments, of the first current collector 211 and the second current collector 221, one is a positive current collector and the other is a negative current collector.

In some embodiments, both the positive current collector and the negative current collector are metal layers. As an example, the positive current collector may be a metal layer containing at least one of aluminum, nickel, tantalum, or titanium, such as aluminum foil. The negative current collector may be a metal layer containing at least one of copper, nickel, tantalum, or titanium, such as copper foil.

In some embodiments, of the first active material layer 212 and the second active material layer 222, one is a positive active material layer that includes a positive active material, and the other is a negative active material layer that includes a negative active material.

In some embodiments, the positive active material includes at least one of lithium cobalt oxide, lithium nickel cobalt manganese oxide, lithium nickel cobalt aluminum oxide, lithium iron phosphate, lithium manganese iron phosphate, or lithium manganese oxide.

In some embodiments, the negative active material includes at least one of graphite, hard carbon, soft carbon, silicon, a silicon-oxygen material, or a silicon-carbon material.

In some embodiments, the separator 23 is an insulating film such as a polyethylene film, a polypropylene film, a polyester film, or a polyimide film.

In some embodiments, the cylindrical battery 100 further includes an electrolyte solution (not shown in the figure). The electrolyte solution is accommodated in the first space 15.

In some embodiments, the electrolyte solution is in any one of the following states: a gel state, a solid state, and a liquid state.

In some embodiments, the electrolyte solution includes a lithium salt and a nonaqueous solvent.

In some embodiments, the lithium salt includes at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiPO₂F₂, or the like.

In some embodiments, the nonaqueous solvent includes at least one of carbonate compound, a carboxylate compound, an ether compound, a nitrile compound, or another organic solvent, or the like. For example, the carbonate compound may include at least one of diethyl carbonate (DEC), dimethyl carbonate (DMC), dipropyl carbonate (DPC), methyl propyl carbonate (MPC), ethylene propyl carbonate (EPC), ethylene carbonate (EC), propylene carbonate (PC), butylene carbonate (BC), vinyl ethylene carbonate (VEC), fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or the like.

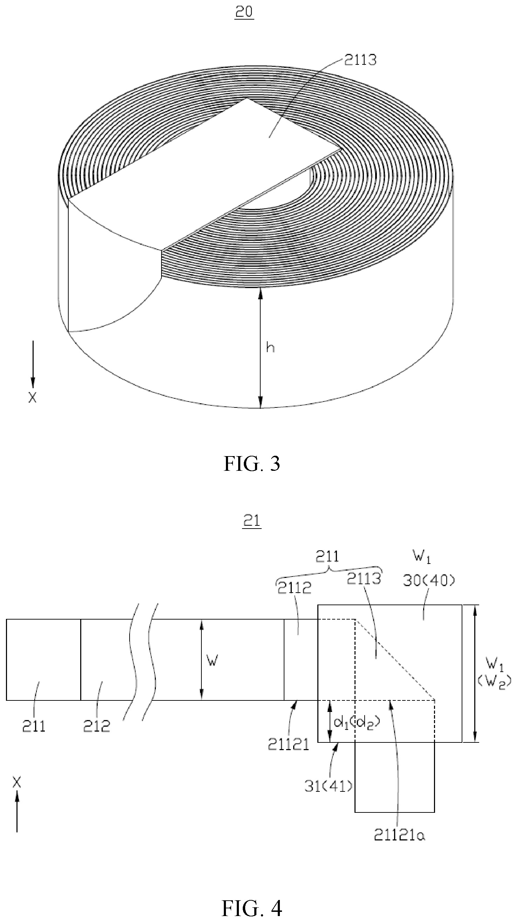

In FIG. 4 to FIG. 11 of this application, to clearly illustrate the structure of the first electrode plate 21 and the second electrode plate 22, the first electrode plate 21 and the second electrode plate 22 are shown in a fully or partially flat spread-out state. When the first electrode plate 21 and the second electrode plate 22 are in a wound state, the first electrode plate 21 and the second electrode plate 22 are wound along their respective length directions.

In some embodiments, as shown in FIG. 2 to FIG. 4, the first current collector 211 includes a first blank foil portion 2111 located at an outermost turn of the wound structure of the first electrode plate 21. The first blank foil portion 2111 is not covered by the first active material layer 212. The first blank foil portion 2111 is formed of a first part 2112 and a second part 2113. The first part 2112 extends along a winding direction of the electrode assembly 20. The second part 2113 includes a terminating end of the first electrode plate 21. The second part 2113 is formed by bending the first blank foil portion 2111. The terminating end of the first electrode plate 21 is located between the first end wall 11 and the electrode assembly 20. The second part 2113 is connected to the first part 2112 and the first end wall 11. Here, the terminating end of the first electrode plate 21 means a trailing end of the first electrode plate 21 in its wound structure, that is, the end, located at the outermost turn of the wound structure, of the first electrode plate 21.

In some embodiments, the second part 2113 is located on a side of the first part 2112, the side being oriented toward the winding center of the electrode assembly 20 along the thickness direction of the first electrode plate 21. In other embodiments, the second part 2113 is located on a side of the first part 2112, the side being oriented toward the circumferential wall 12 along the thickness direction of the first electrode plate 21.

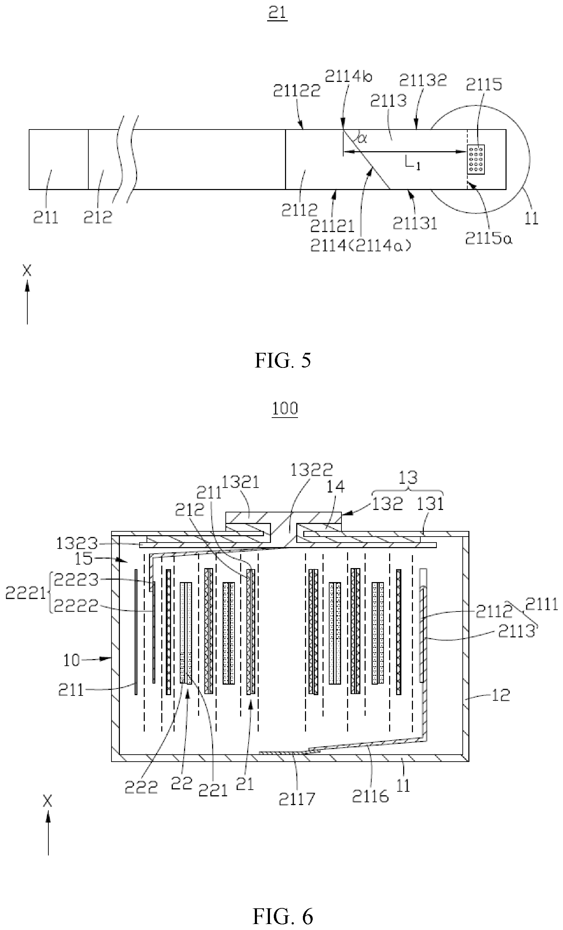

In some embodiments, as shown in FIG. 4 and FIG. 5, a first edge 2114 is formed at a junction between the first part 2112 and the second part 2113. The first part 2112 includes a second edge 21121 and a third edge 21122 opposite to each other along the first direction X. The second edge 21121 is closer to the first end wall 11 than the third edge 21122. The first edge 2114 intersects the third edge 21122 to form a first fold point 2114b.

The first edge 2114 is a crease (defined as a first crease 2114a) formed by bending the first blank foil portion 2111 for the purpose of forming the second part 2113, or the first edge 2114 is an extension line segment of the first crease 2114a. Specifically, as shown in FIG. 4, the first crease 2114a can be observed when the first blank foil portion 2111 is spread out. FIG. 4 shows a complete first crease 2114a, indicating that the first crease 2114a intersects both the second edge 21121 and the third edge 21122. In this case, the first crease 2114a is the first edge 2114. However, in some embodiments of this application, the first crease 2114a assumes an incomplete state, indicating that the first crease 2114a intersects either the second edge 21121 or the third edge 21122, or the first crease intersects neither the second edge 21121 nor the third edge 21122. In this case, an extension line segment may be drawn along the extension direction of the first crease 2114a. The extension line segment intersects both the second edge 21121 and the third edge 21122. Intersections between the extension line segment and the second edge 21121 and the third edge 21122 are the two endpoints of this extension line segment. This extension line segment is used as the first edge 2114. The first edge 2114 is a boundary line between the first part 2112 and the second part 2113.

In some embodiments, as shown in FIG. 2 and 5, a region of connection between the second part 2113 and the first end wall 11 is the first region 2115. A distance between the first end wall 11 and the second end wall 13 along the first direction X is H. An inner radius of the circumferential wall 12 is R. Along the extension direction of the second part 2113, a minimum distance from the first fold point 2114b to the first region 2115 is L₁, satisfying H + R ≤ L₁. The extension direction of the second part 2113 is the length direction of the first electrode plate 21 in a flat spread-out state.

In this embodiment, the minimum distance from the first fold point 2114b to the first region 2115 is greater than a sum of the height of the electrode assembly 20 along the first direction X and the inner radius of the circumferential wall 12. When the electrode assembly 20 expands in volume during charging and discharging, under the action of internal stress, the first part 2112 moves along an opposite direction of the winding direction of the electrode assembly 20, and drives the second part 2113 to move. In this way, the second part 2113 changes to a more tightly stretched state than the original state, thereby releasing at least a part of stress. This reduces the probability of tearing or strip fracture of the first electrode plate 21 caused by the accumulation of internal stress, thereby improving the lifespan of the cylindrical battery 100.

A method for measuring the distance H between the first end wall 11 and the second end wall 13 along the first direction X is as follows:

The first end wall 11 includes a first side 111. The first side 111 is located in the first space 15. The second end wall 13 includes a second side 13231. The second side 13231 is located in the first space 15. The first side 111 and the second side 13231 are arranged opposite to each other along the first direction X. The minimum distance H between the first end wall 11 and the second end wall 13 along the first direction X means a distance between the first side 111 and the second side 13231 along the first direction X. To measure H, the cylindrical battery 100 is scanned using a computed tomography (CT) instrument, and H is measured.

The inner radius R of the circumferential wall 12 is measured by scanning the cylindrical battery 100 using a CT instrument. The inner diameter of the circumferential wall 12 is measured, and a half of the length of the inner diameter is R.

A method for measuring the minimum distance L₁ from the first fold point 2114b to the first region 2115 is as follows:

A slice of the first electrode plate 21 is taken, where the slice contains the first fold point 2114b and the second part 2113. The first end wall 11 is removed together with the slice, and the first end wall is kept connected to the second part 2113 in order to ensure integrity of the first region 2115. The slice of the first electrode plate 21 is spread out flat, and the second part 2113 is pulled toward a such a direction that the second part 2113 tends to be separated from the first end wall 11, until the second part 2113 is limited by the first region 2115 and unable to be pulled any further. The second part 2113 is pressed down so that the second part 2113 and the first end wall 11 are stacked along the thickness direction of the first electrode plate 21, thereby forming a crease. The crease is defined as a second crease 2115a (as shown in FIG. 5). The second crease 2115a is perpendicular to an edge line of the second part 2113 along the width direction of the first electrode plate 21. The second crease 2115a passes through a point on an edge of the first region 2115, the edge facing the first part 2112. The slice of the first electrode plate 21 is spread out. The length from the first fold point 2114b to the second crease 2115a along the length direction of the first electrode plate 21 is measured and recorded as L₁. During measurement, observation and measurement may be carried out using an optical microscope (OMM).

In some embodiments, as shown in FIG. 2 and FIG. 3, a cross-section, perpendicular to the first direction X, of the electrode assembly 20 is annular in shape, an outer radius of the electrode assembly 20 is R₁, and an inner radius of the electrode assembly 20 is R₂, satisfying L₁ ≤ H + R + 30%π(R₁ + R₂). Because H + R ≤ L₁, the part of the second part 2113, which exceeds the height of the electrode assembly 20 along the first direction, is accommodated between the first end wall 11 and the electrode assembly 20. By defining L₁ ≤ H + R + 30%π(R₁ + R₂), this application prevents the part of the second part 2113, which is located between the first end wall 11 and the electrode assembly 20, from being excessively long, thereby reducing the risk that the second part 2113 squeezes the surface, facing the first end wall 11, of the electrode assembly 20 and consequently induces a poor K value. The term "K value" means a voltage drop of the cylindrical battery 100 per unit time.

The outer radius R₁ of the electrode assembly 20 is measured by scanning the cylindrical battery 100 using a CT instrument. The outer diameter of the cylindrical battery 20 is measured, and a half of the length of the outer diameter is the outer radius R₁. The thickness of the second part needs to be included when measuring the outer diameter.

The outer radius R₂ of the electrode assembly 20 is measured by scanning the cylindrical battery 100 using a CT instrument. The inner diameter of the cylindrical battery 20 is measured, and a half of the length of the inner diameter is the inner diameter R₂.

It is noted that, during measurement of R₁, the measurement is performed based on the outermost-turn current collector (the first current collector 211 or the second current collector 221) of the wound structure of the electrode assembly 20; during measurement of R₂, the measurement is performed based on the innermost-turn current collector (the first current collector 211 or the second current collector 221) of the wound structure of the electrode assembly 20.

In addition, in an embodiment of this application, the value of π is 3.14.

In some embodiments, H + R + 10%π(R₁ + R₂) ≤ L1 ≤ H + R + 20%π(R₁ + R₂). By defining L₁ ≥ H + R + 10%π(R₁ + R₂), this application further reduces the probability of tearing or strip fracture of the first electrode plate 21 caused by accumulation of internal stress. By defining L₁ ≤ H + R + 20%π(R₁ + R₂), this application further reduces the risk that the second part 2113 squeezes the surface, facing the first end wall 11, of the electrode assembly 20 and consequently induces a poor K value.

In some embodiments, the second part 2113 is welded to the first end wall 11.

In some embodiments, the second part 2113 is bonded to the first end wall 11 using conductive adhesive.

In some embodiments, as shown in FIG. 4, the cylindrical battery 100 includes a first adhesive piece 30 and a second adhesive piece 40. Both the first adhesive piece 30 and the second adhesive piece 40 are configured to bond the first part 2112 and the second part 2113 together. The first adhesive piece 30 is bonded to surfaces of the first part 2112 and the second part 2113, the surfaces facing the circumferential wall 12. The second adhesive piece 40 is bonded to surfaces of the first part 2112 and the second part 2113, the surfaces facing the winding center axis of the electrode assembly 20. In FIG. 4, the projections of the first adhesive piece 30 and the second adhesive piece 40 along the thickness direction of the first electrode plate 21 coincide. The first adhesive piece 30 and the second adhesive piece 40 help maintain the stacked state of the first part 2112 and the second part 2113 along the thickness direction of the first electrode plate 21, improve the stability of the second part 2113 during connection to the first end wall 11, and facilitate operation of processing equipment. The first adhesive piece 30 covers at least a part of the edge of the first part 2112 and a part of the edge of the second part 2113. The second adhesive piece 40 covers at least a part of the edge of the first part 2112 and a part of the edge of the second part 2113. The first adhesive piece 30 and the second adhesive piece 40 help reduce the probability of the burrs on the edges of the first part 2112 and the second part 2113 piercing the separator 23 and inducing an internal short circuit.

It is noted that the adhesiveness of the first adhesive piece 30 and the second adhesive piece 40 weakens after being infiltrated by the electrolyte solution. This does not affect the change in the relative position between the first part 2112 and the second part 2113, that is, does not exert an effect on the first part 2112 in driving the second part 2113 to move to release stress.

In some embodiments, as shown in FIG. 4, the first adhesive piece 30 is adhesive tape.

In some embodiments, the first adhesive piece 30 includes a first adhesive portion and a second adhesive portion. Both the first adhesive portion and the second adhesive portion are approximately rectangular. The first adhesive portion is configured to bond the first part 2112 and the second part 2113 together. The first adhesive portion is bonded to surfaces of the first part 2112 and the second part 2113, the surfaces facing the circumferential wall 12. Along the width direction of the first part 2112, two edges of the first adhesive portion extend beyond the second edge 21121 and the third edge 21122, respectively. The second adhesive portion is configured to bond the first adhesive portion and the second part 2113 together. The second adhesive portion is bonded to surfaces of the first adhesive portion and the second part 2113, the surfaces facing the circumferential wall 12. Along the width direction of the second part 2113, both edges of the second adhesive portion extend beyond the edge of the second part 2113. Both the first adhesive portion and the second adhesive portion are adhesive tape.

In some embodiments, as shown in FIG. 4, the second adhesive piece 40 is adhesive tape.

In some embodiments, the second adhesive piece 40 includes a third adhesive portion and a fourth adhesive portion. Both the third adhesive portion and the fourth adhesive portion are approximately rectangular. The third adhesive portion is configured to bond the first part 2112 and the second part 2113 together. The third adhesive portion is bonded to surfaces of the first part 2112 and the second part 2113, the surfaces facing the winding center of the electrode assembly 20. Along the width direction of the first part 2112, two edges of the third adhesive portion extend beyond the second edge 21121 and the third edge 21122, respectively. The fourth adhesive portion is configured to bond the third adhesive portion and the second part 2113 together. The fourth adhesive portion is bonded to surfaces of the third adhesive portion and the second part 2113, the surfaces facing the winding center of the electrode assembly 20. Along the width direction of the second part 2113, both edges of the second adhesive portion extend beyond the edge of the second part 2113. Both the first adhesive portion and the second adhesive portion are adhesive tape.

In some embodiments, the adhesive tape includes a substrate layer and an adhesive layer. The adhesive layer is disposed on a surface of the substrate layer, the surface facing the first part 2112 and the second part 2113.

In some embodiments, the substrate layer may be one selected from polyethylene terephthalate, co-extruded polypropylene, oriented polystyrene, thermoplastic polyurethane, polylactic acid, polyolefin, and polyimide.

In some embodiments, the adhesive layer is made of one or more of the following: natural rubber, styrene-butadiene rubber, isoprene rubber, poly(styrene-b-polybutadiene-b-styrene), poly(hydrogenated styrene-b-polybutadiene-b-styrene), poly(styrene-b-isoprene-b-styrene), poly(hydrogenated styrene-b-polyisoprene-b-styrene), polyisobutylene, poly(amorphous α-co-olefin), petroleum resin, terpene resin, and rosin resin.

In some embodiments, as shown in FIG. 4, the projection of the second edge 21121 onto the second part 2113 along the thickness direction of the first electrode plate 21 is a first projection line 21121a. The first adhesive piece 30 includes a fourth edge 31. The fourth edge 31 is disposed opposite to the first projection line 21121a along the first direction X. The fourth edge 31 is closer to the first region 2115 than the first projection line 21121a. A distance between the first projection line 21121a and the fourth edge 31 along the extension direction of the second part 2113 is d₁, and a width of the first part 2112 along the first direction X is W, satisfying 5%W ≤ d₁ ≤ 70%W. By defining d₁ ≥ 5%W, this application ensures that the coverage length by which the first adhesive piece 30 covers the edge of the second part 2113 is not excessively short, thereby reducing the probability of the burrs on the edge of the second part 2113 piercing the separator 23. By defining d₁ ≤ 70%W, this application ensures that the distance between the first adhesive piece 30 and the first region 2115 is not excessively short, thereby facilitating connection between the second part 2113 and the first end wall 11, and reducing the probability of poor connection between the second part 2113 and the first end wall 11 caused by the presence of the first adhesive piece 30. Here, the poor connection includes, but is not limited to: the fourth edge 31 is at an excessively small distance from the first region 2115, and consequently encroaches on the area allowed for connection between the second part 2113 and the first end wall 11, thereby resulting in an excessively small area of the first region 2115; or, in the case of welding between the second part 2113 and the first end wall 11, the interference from the first adhesive piece 30 results in an incomplete-fusion weld between the second part 2113 and the first end wall 11.

d₁ is calculated as d₁ = W₁ - W, where the width W₁ of the first adhesive piece 30 along the first direction X and the width W of the first part 2112 along the first direction X are measured separately. During measurement, observation and measurement may be carried out using an optical microscope (OMM).

In some embodiments, as shown in FIG. 4, the second adhesive piece 40 includes a fifth edge 41. The fifth edge 41 is disposed opposite to the first projection line 21121a along the first direction X. The fifth edge 41 is closer to the first region 2115 than the first projection line 21121a. The distance between the first projection line 21121a and the fifth edge 41 along the extension direction of the second part 2113 is d₂, and the width of the first part 2112 along the first direction X is W, satisfying 5%W ≤ d₂ ≤ 70%W. By defining d₂ ≥ 5%W, this application ensures that the coverage length by which the second adhesive piece 40 covers the edge of the second part 2113 is not excessively short, thereby reducing the probability of the burrs on the edge of the second part 2113 piercing the separator 23. By defining d₂ ≤ 70%W, this application ensures that the distance between the second adhesive piece 40 and the first region 2115 is not excessively short, thereby facilitating connection between the second part 2113 and the first end wall 11, and reducing the probability of poor connection between the second part 2113 and the first end wall 11 caused by the presence of the second adhesive piece 40.

d₂ is calculated as d₂ = W₂ - W, where the width W₂ of the second adhesive piece 40 along the first direction X and the width W of the first part 2112 along the first direction X are measured separately. During measurement, observation and measurement may be carried out using an optical microscope (OMM).

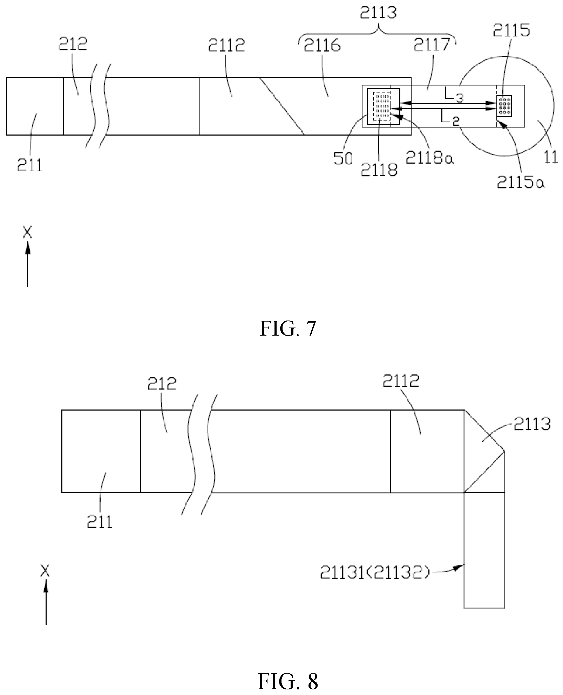

In some embodiments, as shown in FIG. 6 and FIG. 7, the second part 2113 includes a connecting portion 2116 and an interconnecting portion 2117. The connecting portion 2116 and the first part 2112 are an integrally formed structure. The interconnecting portion 2117 is connected to the connecting portion 2116, and the interconnecting portion 2117 is connected to the first end wall 11. A region of connection between the interconnecting portion 2117 and the first end wall 11 is the first region 2115, and a region of connection between the connecting portion 2116 and the interconnecting portion 2117 is a second region 2118. The interconnecting portion 2117 improves the current-carrying capacity of the first electrode plate 21.

In some embodiments, the first region 2115 coincides with the second region 2118. In this case, the first end wall 11, the interconnecting portion 2117, and the connecting portion 2116 are stacked up in sequence along the first direction X. The first end wall 11, the interconnecting portion 2117, and the connecting portion 2116 may be connected together by welding, thereby making the first region 2115 and the second region 2118 coincide.

In some embodiments, the first region 2115 is spaced apart from the second region 2118. In this case, one end of the interconnecting portion 2117 is connected to the connecting portion 2116, and the other end of the interconnecting portion is connected to the first end wall 11.

In some embodiments, the interconnecting portion 2117 and the connecting portion 2116 are bonded together using conductive adhesive, or the interconnecting portion 2117 and the connecting portion 2116 are welded together.

In some embodiments, the conductive adhesive is one of: a conductive adhesive filled with metal such as silver, copper, gold, nickel, or aluminum; a carbon-filled conductive adhesive; a conductive polymer adhesive; or a conductive epoxy adhesive.

In some embodiments, the interconnecting portion 2117 is metal foil. As an example, the material of the interconnecting portion 2117 is aluminum or nickel.

In some embodiments, as shown in FIG. 7, the interconnecting portion 2117 is welded to the connecting portion 2116, and the interconnecting portion 2117 is welded to the first end wall 11. Along the extension direction of the second part 2113, a minimum distance between the first region 2115 and the second region 2118 is L₂, satisfying 1/5R ≤ L₂ ≤ 3/5R. By defining L₂ ≥ 1/5R, this application prevents the distance between the first region 2115 and the second region 2118 from being excessively small, thereby reducing the probability of the interconnecting portion 2117 being damaged due to two welding processes. By defining L₂ ≤ 3/5R, this application prevents the distance between the first region 2115 and the second region 2118 from being excessively large, and prevents the length of the interconnecting portion 2117 from being excessively large, thereby reducing the probability of the interconnecting portion 2117 itself being stacked along the first direction X, and consequently reducing the risk that the interconnecting portion 2117 squeezes the surface, facing the first end wall 11, of the electrode assembly 20 and induces a poor K value.

The method for measuring L₂ is as follows: A slice of the first electrode plate 21 is taken, where the slice contains the connecting portion 2116 and the interconnecting portion 2117. The slice remains connected to a first end cap. The first end cap remains connected to the interconnecting portion 2117. The second part 2113 is bent (here, the interconnecting portion 2117 is bent) using the method described above to form a second crease 2115a. The interconnecting portion 2117 is pulled in such a direction that the interconnecting portion 2117 tends to be separated from the connecting portion 2116, until the interconnecting portion 2117 is limited by the second region 2118 and unable to be pulled any further. The interconnecting portion 2117 is pressed down so that the interconnecting portion 2117 and the connecting portion 2116 are stacked along the thickness direction of the first electrode plate 21, thereby forming a crease. The crease is defined as a third crease 2118a. The third crease 2118a passes through a point on the edge of the second region 2118, the edge facing the interconnecting portion 2117. The third crease 2118a is perpendicular to the edge line of the interconnecting portion 2117 along the width direction of the first electrode plate 21. The slice of the first electrode plate 21 is spread out. The length from the second crease 2115a to the third crease 2118a along the length direction of the first electrode plate 21 is measured and recorded as L₂. During measurement, observation and measurement may be carried out using an optical microscope (OMM).

In some embodiments, as shown in FIG. 7, the interconnecting portion 2117 is welded to the connecting portion 2116. The cylindrical battery 100 further includes a third adhesive piece 50. The third adhesive piece 50 is configured to bond the connecting portion 2116 and the interconnecting portion 2117 together, and is located on one side of the connecting portion 2116 and the interconnecting portion 2117, the side facing the wound structure. Along the thickness direction of the interconnecting portion 2117, the third adhesive piece 50 covers the second region 2118, and the third adhesive piece 50 is spaced apart from the first region 2115. Along the extension direction of the second part 2113, a minimum distance between the third adhesive piece 50 and the first region 2115 is L₃, satisfying 1/5R ≤ L₃ ≤ 2/5R. By providing the third adhesive piece 50, this application reduces the probability that a weld joint formed by the welding between the interconnecting portion 2117 and the connecting portion 2116 pierces the separator 23 and induces a short circuit in the electrode assembly 20. By defining L₃ ≥ 1/5R, this application ensures that the distance between the third adhesive piece 50 and the first region 2115 is not excessively small, thereby reducing the probability that the placement of the third adhesive piece 50 affects effective electrical connection between the interconnecting portion 2117 and the first end wall 11. By defining L₃ ≤ 2/5R, this application ensures that the distance between the third adhesive piece 50 and the first region 2115 is not excessively large, thereby increasing the coverage area of the third adhesive piece 50 and improving the bonding stability of the third adhesive piece 50.

The method for measuring L₃ is as follows: A slice of the first electrode plate 21 is taken, where the slice contains the connecting portion 2116 and the interconnecting portion 2117. The interconnecting portion 2117 remains connected to the first end wall 11. The second part 2113 is bent (here, the interconnecting portion 2117 is bent) using the method described above to form a second crease 2115a (as shown in FIG. 7). The slice of the first electrode plate 21 is spread out. The distance from the edge, oriented toward the first region 2115, of the third adhesive piece 50 to the second crease 2115a along the length direction of the first electrode plate 21 is measured and recorded as L₃.

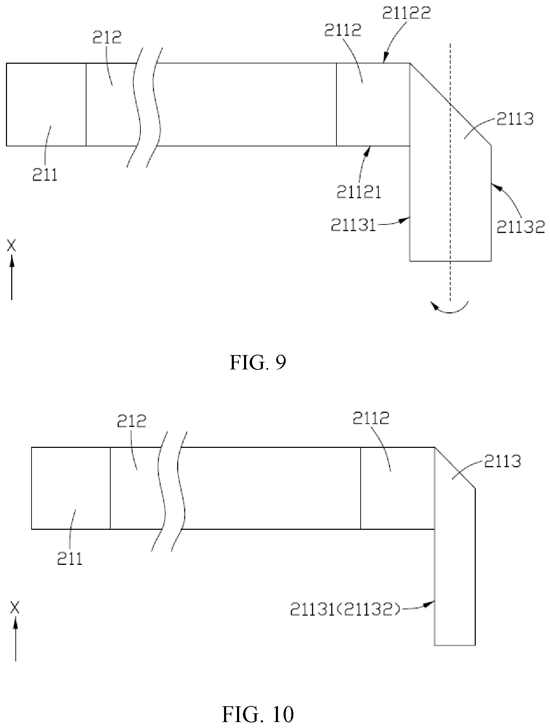

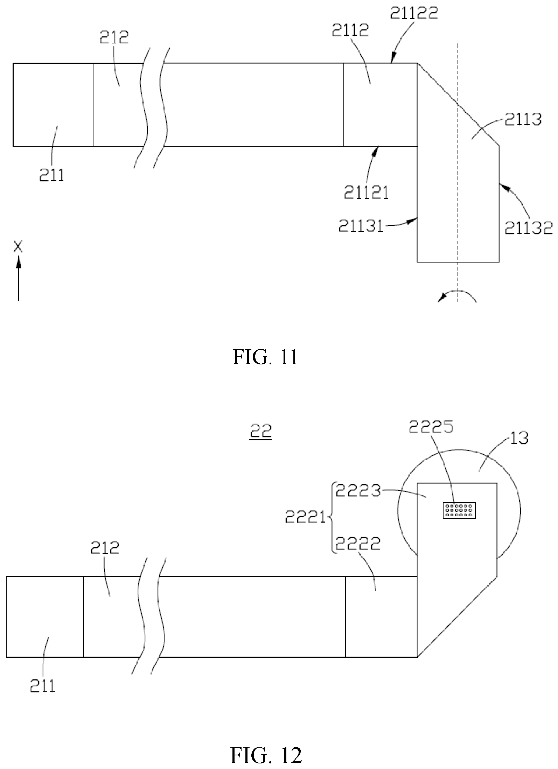

In some embodiments, the second part 2113 is a folded structure. The folded structure of the second part 2113 is shown in FIG. 8 and FIG. 10. The folding process by which the folded structure of the second part 2113 is formed is shown in FIG. 9 and FIG. 11. In FIG. 9 and FIG. 11, dashed line indicates the position of the crease formed after the second part 2113 is folded, and the curved arrow indicates the direction of folding the second part 2113. The state after the second part 2113 is folded in the manner shown in FIG. 9 is shown in FIG. 8. In FIG. 8, the sixth edge 21131 and the seventh edge 31132 are located on the same side of the first part 2112 along the thickness direction of the first part. The state after the second part 2113 is folded in the manner shown in FIG. 11 is shown in FIG. 10. In FIG. 10, the sixth edge 21131 and the seventh edge 31132 are located on different sides of the first part 2112 along the thickness direction of the first part.

Specifically, after a part of the first blank foil portion 2111 is bent toward a direction that brings the terminating end of the first electrode plate 21 closer to the first end wall 11 (as shown in FIG. 9 and FIG. 11), the second part 2113 includes a sixth edge 21131 and a seventh edge 21132 opposite to each other along the winding direction of the electrode assembly 20. The sixth edge 21131 and the second edge 21121 are the same edge line of the first current collector 211. The seventh edge 21132 and the third edge 21122 are the same edge line of the first current collector 211. The folded structure of the second part 2113 is formed by bending a part of the first blank foil portion 2111 toward a direction that brings the terminating end of the first electrode plate 21 closer to the first end wall 11 and then folding the second part 2113 in such a way that the sixth edge 21131 is closer to the first part 2112. The height of the electrode assembly 20 along the first direction X is h (as shown in FIG. 3), satisfying h ≥ 4R/3. The formula h ≥ 4R/3 means that the width of the first electrode plate 21 is greater than or equal to 4R/3. The second part 2113 is wider than the inner diameter of the circumferential wall 12. In the case that the projected area of the second region 2118 along the first direction X remains constant, the second part 2113 is folded and then connected to the first end wall 11. Compared to the case in which the second part 2113 is not folded but is directly connected to the first end wall 11, this technical solution increases the proportion of a junction part of the second part 2113 between the second part and the first end wall 11 in relation to the whole of the second part 2113, thereby improving the stability of connection between the second part 2113 and the first end wall 11.

It is noted that in the cylindrical battery 100, a part of the second part 2113 is located between the first end wall 11 and the electrode assembly 20, and a part of the second part is located between the circumferential wall 12 and the electrode assembly 20. As mentioned above, "the second part 2113 includes a sixth edge 21131 and a seventh edge 21132 opposite to each other along the winding direction of the electrode assembly 20". In determining the sixth edge 21131 and the seventh edge 21132, the sixth edge and the seventh edge are determined based on the part of the second part 2113 that is located between the circumferential wall 12 and the electrode assembly 20. The determined sixth edge 21131 and seventh edge 21132 delineate the overall structure of the second part 2113. In other words, the part of the second part 2113, which is located between the first end wall 11 and the electrode assembly 20, includes the sixth edge 21131 part and the seventh edge 211332 part. In the states shown in FIG. 9 and FIG. 11, the sixth edge 21131 and the seventh edge 21132 are continuous line segments extending along the first direction X.

In some embodiments, as shown in FIG. 10 and FIG. 11, along the thickness direction of the first electrode plate 21, a part of the second part 2113 is located on one side of the first part 2112, the side facing the circumferential wall 12. A part of the second part 2113 is located on one side of the first part 2112, the side facing the winding center of the electrode assembly 20. This helps reduce the resistance encountered by the first part 2112 due to the folded state of the second part 2113 when the first part drives the second part 2113 to move.

In some embodiments, the second part 2113 in the folded state may be folded at least once more to further reduce the width.

In some embodiments, as shown in FIG. 5, the second part 2113 includes a sixth edge 21131 and a seventh edge 21132 opposite to each other along the winding direction of the electrode assembly 20. The sixth edge 21131 and the second edge 21121 are the same edge line of the first current collector 211. The seventh edge 21132 and the third edge 21122 are the same edge line of the first current collector 211. The angle between the first edge 2114 and the seventh edge 21132 is α, satisfying 40° ≤ α ≤ 70°. By defining α ≥ 40°, this application ensures that α is not excessively small, and makes it convenient for the first part 2112 to drive the second part 2113 to move. By defining α ≤ 70°, this application ensures that α is not excessively large, facilitates connection between the second part 2113 and the first end wall 11, and reduces the probability of an internal short circuit caused by insertion of a corner of an end portion of the second part 2113 into the wound structure of the electrode assembly 20, where the end portion of the second part is connected to the first end wall 11.

To measure angle α, a slice of the first electrode plate 21 may be taken, where the slice contains the first part 2112 and the second part 2113, and then the first part 2112 and the second part 2113 are spread out, and then the angle α between the first edge 2114 and the seventh edge 21132 is measured. During measurement, observation and measurement may be carried out using an optical microscope (OMM).

In some embodiments, as shown in FIG. 2 and FIG. 6, the second electrode plate 22 includes a second current collector 221 and a second active material layer 222 that are stacked up. The second current collector 221 includes a second blank foil portion 2221 located at the outermost turn of the wound structure of the second electrode plate 22. The second blank foil portion 2221 is not covered by the second active material layer 222.

In some embodiments, as shown in FIG. 6, a first interconnecting piece 60 is provided and welded to the second blank foil portion 2221. A part of the first interconnecting piece 60 is located between the second electrode plate 22 and the circumferential wall 12, and a part of the first interconnecting piece 60 is located between a surface of the electrode assembly 20 and the second end wall 13, the surface facing the second end wall 13. The first interconnecting piece 60 is welded to the second end wall 13.

In some embodiments, as shown in FIG. 2, FIG. 12, and FIG. 13, the second blank foil portion 2221 is formed of a third part 2222 and a fourth part 2223. The third part 2222 extends along the winding direction of the electrode assembly 20. The fourth part 2223 includes the terminating end of the second electrode plate 22. The fourth part 2223 is formed by bending a part of the second blank foil portion 2221 toward a direction that brings the terminating end of the second electrode plate 22 closer to the second end wall 13. The fourth part 2223 is connected to the third part 2222 and the second end wall 13. A region of connection between the fourth part 2223 and the second end wall 13 is a third region 2225. An eighth edge 2224 is formed at a junction between the third part 2222 and the fourth part 2223. The third part 2222 includes a ninth edge 22221 and a tenth edge 22222 opposite to each other along the first direction X. The tenth edge 22222 is closer to the second end wall 13 than the ninth edge 22221. The tenth edge 22222 intersects the eighth edge 2224 to form a second fold point 2224b. Along the extension direction of the fourth part 2223, a minimum distance from the second folding point 2224b to the third region 2225 is L₄, satisfying H + R ≤ L₄. Here, the eighth edge 2224 is a crease (defined as a fourth crease 2224a) formed by bending the second blank foil portion 2221 for the purpose of forming the fourth part 2223, or the eighth edge 2224 is an extension line segment of the fourth crease 2224a. The minimum distance from the second fold point 2224b to the third region 2225 is greater than a sum of the height of the electrode assembly 20 along the first direction X and the inner radius of the circumferential wall 12. When the electrode assembly 20 expands in volume during charging and discharging, under the action of internal stress, the third part 2222 moves along an opposite direction of the winding direction of the electrode assembly 20, and drives the fourth part 2223 to move. In this way, the fourth part 2223 changes to a more tightly stretched state than the original state, thereby releasing at least a part of stress. This reduces the probability of tearing or strip fracture of the second electrode plate 22 caused by the accumulation of internal stress, thereby improving the lifespan of the cylindrical battery 100.

In some embodiments, one of the first electrode plate 21 or the second electrode plate 22 is a negative electrode plate. The negative electrode plate includes a negative active material layer and a negative current collector stacked up. The negative active material layer includes silicon. Based on the mass of the negative active material layer, the mass percent of silicon is at least 3%. Compared with a silicon-free electrode plate, the silicon-containing electrode plate undergoes greater volume change and makes the electrode assembly 20 generate greater internal stress during charging and discharging. By providing the second part 2113, this application reduces the probability of tearing or strip fracture of the first electrode plate 21.

The silicon content in the negative electrode plate may be determined using the following method:

The cylindrical battery 100 is discharged at a constant current of 0.1C until the voltage reaches 3.0 V, and then the cylindrical battery 100 is disassembled to obtain a negative electrode plate. The negative electrode plate is cleaned with dimethyl carbonate (DMC) for 10 minutes, and then the negative electrode plate is baked at 100 °C for 2 hours for later use. The negative active material layer is scraped off from the negative electrode plate, and the powder of the negative active material layer is collected. The content of silicon and lithium in the powder of the negative electrode material layer is measured by using an inductively coupled plasma spectrometer (ICP) (model: Agilent 5800, supplied by Agilent). The content of silicon in the powder of the negative active material layer is measured by using a high-frequency carbon-sulfur analyzer (model: DK-606).

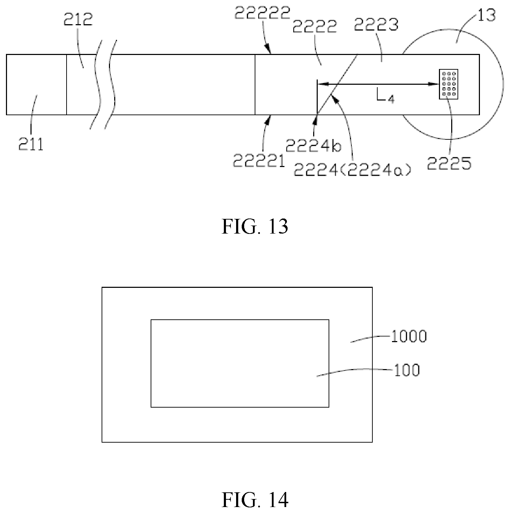

As shown in FIG. 14, an embodiment of this application further provides an electronic device 1000. The electronic device includes the cylindrical battery 100 mentioned in any one of the above embodiments.

In some embodiments, the electronic device 1000 may be, but is not limited to, a mobile phone, a laptop computer, an electric toy, an electric tool, or an electronic cigarette device.

To verify the effect of the technical solution provided in an embodiment of this application on the lifespan of the cylindrical battery 100, the applicant hereof performs the following experiment.

The experiment includes two comparative embodiments and 12 embodiments. Each comparative embodiment and each embodiment include 30 cylindrical batteries 100. In the cylindrical battery 100, the first electrode plate 21 is set to be a negative electrode plate, and the second electrode plate 22 is set to be a positive electrode plate.

A process for preparing a cylindrical battery 100 in Embodiment 1 includes the following steps:
(1) Preparation of a positive electrode plate: Mixing lithium cobalt oxide (LiCoO₂) as an active material, conductive carbon black (Super P), carbon nanotubes (CNTs), and polyvinylidene fluoride (PVDF) at a mass ratio of 97.5:0.5:0.5:1.5, and adding N-methylpyrrolidone (NMP) as a solvent to formulate a positive active material slurry in which the solid content is 75 wt%, and stirring well for later use. Using 10 µm-thick aluminum foil as a positive current collector. Using a slot-die coating machine to apply the active material slurry evenly onto one surface of the positive current collector along the thickness direction of the current collector, and then drying the slurry at 90 °C to obtain a positive electrode plate coated with the positive active material on a single side. Subsequently, repeating the above coating steps on the other surface of the positive current collector along the thickness direction of the current collector to obtain a positive electrode plate coated with the positive active material layer on both sides. At this time, the thickness of each positive active material layer along the thickness direction of the positive electrode plate is 90 µm. Subsequently, cold-pressing the coated positive electrode plate, whereupon the thickness of the positive active material layer is 80 µm. Afterward, welding an interconnecting portion to a part not covered by the positive active material layer on the positive current collector, and the part not covered by the positive active material layer is a start segment of the positive electrode plate in the wound structure.
(2) Preparation of a negative electrode plate: Mixing artificial graphite as an active material, conductive carbon black (Super P), styrene-butadiene rubber (SBR), and sodium carboxymethyl cellulose (CMC) at a mass ratio of 97:0.5:1.3:1.2. Adding deionized water as a solvent to formulate a negative active material slurry in which the mass percent is 50 wt%, and stirring well for later use. Using 10 µm-thick copper foil as a negative current collector. Using a slot-die coating machine to apply the negative active material slurry evenly onto one surface of the negative current collector along the thickness direction of the current collector, and then drying the slurry at 110 °C to obtain a negative electrode plate coated with the negative active material layer on a single side. Subsequently, repeating the above steps on the other surface of the negative current collector along the thickness direction of the current collector to obtain a negative electrode plate coated with the negative active material layer on both sides. At this time, the thickness of each negative active material layer along the thickness direction of the negative electrode plate is 90 µm. Subsequently, cold-pressing the coated negative electrode plate, whereupon the thickness of the negative active material layer is 80 µm.
(3) Preparation of an electrolyte solution: Mixing ethylene carbonate (EC), ethyl methyl carbonate (EMC), and diethyl carbonate (DEC) at a weight ratio of EC : EMC : DEC = 30 : 50 : 20 in an dry argon atmosphere to form a base organic solvent, then adding lithium salt hexafluorophosphate (LiPF₆) into the base organic solvent to dissolve, and mixing the solution evenly to obtain an electrolyte solution in which a lithium salt concentration is 1.15 mol/L.
(4) Preparation of a separator 23: Using 7 µm-thick polyethylene porous polymer film as a separator 23.
(5) Preparation of an electrode assembly 20: Stacking the positive electrode plate, the separator 23, and the negative electrode plate along the thickness direction of the negative electrode plate, and then winding the stacked structure to obtain an electrode assembly 20. Bending the first blank foil portion 2111 at the trailing end of the wound structure of the negative electrode plate to form the connecting portion 2116 mentioned above. Welding an interconnecting piece to the connecting portion 2116 to serve as the interconnecting portion 2117 mentioned above. Bending the connecting portion 2116 such that a part of the connecting portion 2116 and the interconnecting portion 2117 move closer to the winding center of the electrode assembly 20. Bending the interconnecting piece welded to the positive current collector such that the end portion of the interconnecting piece moves closer to the winding center of the electrode assembly 20.
(6) Assembling of the cylindrical battery 100: Placing the electrode assembly 20 into a space formed by the circumferential wall 12 and the first end wall 11 of the housing 10. Welding the interconnecting portion 2117 to the first end wall 11, and then welding the interconnecting piece, which is connected to the positive current collector, to the electrode post 132 of the second end wall 13. Subsequently, hermetically connecting the cover 131 of the second end wall 13 and the circumferential wall 12 together. Performing steps such as electrolyte injection, standing, and formation to obtain a cylindrical battery 100.

The preparation process of the cylindrical battery 100 in Comparative Embodiment 2 and Embodiments 2 to 12 is basically the same as that in Embodiment 1 except that the specific values of the relevant parameters listed in Table 1 below are different during the preparation process.

The preparation process of the cylindrical battery 100 in Comparative Embodiment 1 is basically the same as that of the cylindrical battery 100 in Embodiment 1 except that, during the preparation of the negative electrode plate, after the negative electrode plate is cold-pressed, an interconnecting piece is welded to a part not covered by the negative active material layer on the negative current collector. The part not covered by the negative active material layer is a starting segment of the negative electrode plate in the wound structure. The preparation process of the electrode assembly 20 is as follows: Stacking the positive electrode plate, the separator 23, and the negative electrode plate along the thickness direction of the negative electrode plate, and then winding the stacked structure to obtain an electrode assembly 20; bending the interconnecting piece welded to the negative current collector such that the end portion of the interconnecting piece moves closer to the winding center of the electrode assembly 20; and bending the interconnecting piece welded to the positive current collector such that the end portion of the interconnecting piece moves closer to the winding center of the electrode assembly 20. The assembling process of the cylindrical battery 100 is as follows: Placing the electrode assembly 20 into a space formed by the circumferential wall 12 and the second end wall 13 of the housing 10, where the interconnecting piece connected to the positive current collector is oriented toward the opening defined by the circumferential wall 12 (at the opening, the circumferential wall is connected to the second end wall 13), and the interconnecting piece connected to the negative current collector is oriented toward the first end wall 11; welding the interconnecting piece connected to the negative current collector to the first end wall 11, and welding the interconnecting piece connected to the positive current collector to the electrode post 132 of the second end wall 13. Subsequently, hermetically connecting the cover 131 of the second end wall 13 and the circumferential wall 12 together; and performing steps such as electrolyte injection, standing, formation, and capacity grading to obtain a cylindrical battery 100.

The dimensions of the prepared cylindrical battery 100 are as follows: H = 5.72 mm; R = 5.02 mm; R₁ = 9.69/2 = 4.845 mm; R₂ = 2.03/2 = 1.015 mm; W = 4.2 mm. Based on this data, H + R = 10.74 mm; H + R + 30%π(R₁ + R₂) = 16.26 mm, 5%W = 0.21 mm, and 70%W = 2.94 mm.

In Comparative Embodiment 2 and the 12 embodiments, each cylindrical battery 100 is provided with a first adhesive piece 30 and a second adhesive piece 40. For each cylindrical battery 100, the projection of the first adhesive piece 30 and the projection of the second adhesive piece 40 along the thickness direction of the first electrode plate 21 coincide, and d₁ is equal to d₂. Therefore, only the value of d₁ is recorded in Table 1 below.

After the cylindrical battery 100 is prepared, the K value and the cycle capacity retention rate are tested on the cylindrical batteries 100 in each comparative embodiment and each embodiment. For the cylindrical batteries 100 in the same embodiment or same comparative embodiment, the testing order is as follows: first, the K value test is performed on each cylindrical battery 100, and then 10 cylindrical batteries 100 are randomly selected from each embodiment or comparative embodiment for a cycle capacity retention rate test.

A process of the K value test is as follows:
1. Charging a cylindrical battery 100 to a fully charged state, as detailed below:
   1) Maintaining the test temperature at 25 °C.
   2) Leaving the battery to stand for 30 minutes.
   3) Charging the battery at a constant current of 5C until the voltage reaches 4.25 V, and then charging the battery at a constant voltage until the current drops to 3C.
   4) Charging the battery at a constant current of 3C until the voltage reaches 4.35 V, and then charging the battery at a constant voltage until the current drops to 1.5C.
   5) Charging the battery at a constant current of 1.5C until the voltage reaches 4.45 V, and then charging the battery at a constant voltage until the current drops to 0.05C.
2. Measuring the initial voltage: Measuring the voltage of the cylindrical battery 100 as an initial voltage OCV1, which serves as a reference value.
3. Leaving the battery to stand at a temperature of 25 °C for 24 hours.
4. Measuring the voltage after completion of standing: Measuring the voltage OCVB of the cylindrical battery 100 immediately after the standing period.
5. Calculating the self-discharge rate K using the formula: K = (OCV1 - OCVB)/24.

In this test, the cylindrical battery 100 passes the test if the K value falls within a range of 0 to 0.06 mV/h.

A test process of the cycle capacity retention rate is as follows:
1) Maintaining the test temperature at 25 °C.
2) Leaving a cylindrical battery 100 to stand for 30 minutes.
3) Charging the battery at a constant current of 5C until the voltage reaches 4.25 V, and then charging the battery at a constant voltage until the current drops to 3C.
4) Charging the battery at a constant current of 3C until the voltage reaches 4.35 V, and then charging the battery at a constant voltage until the current drops to 1.5C.
5) Charging the battery at a constant current of 1.5C until the voltage reaches 4.45 V, and then charging the battery at a constant voltage until the current drops to 0.05C.
6) Leaving the battery to stand for 5 minutes.
7) Discharging the battery at a constant current of 0.7C until the voltage reaches 3 V, and recording the first-cycle discharge capacity.
8) Leaving the battery to stand for 5 minutes.
9) Repeating steps 3 to 8 for 1200 times, and recording the 1200^{th}-cycle discharge capacity.
10) Calculating the capacity retention rate as: capacity retention rate = (1200^{th}-cycle discharge capacity/first-cycle discharge capacity) × 100%.

In this test, the battery passes the test if the capacity retention rate is 80% or above. Recording the test results in Table 1 after completion of the experiment.

**Table 1**

| Experimental group | L₁ (mm) | α (°) | d₁ (mm) | Test pass rate of cycle capacity retention rate | K value test pass rate |
|---|---|---|---|---|---|
| Comparative Embodiment 1 | / | / | / | 2/10 | 30/30 |
| Comparative Embodiment 2 | 10 | 60 | 1.47 | 5/10 | 30/30 |
| Embodiment 1 | 10.74 | 60 | 1.47 | 10/10 | 30/30 |
| Embodiment 2 | 12 | 60 | 1.47 | 10/10 | 30/30 |
| Embodiment 3 | 16.26 | 60 | 1.47 | 10/10 | 30/30 |
| Embodiment 4 | 17 | 60 | 1.47 | 10/10 | 15/30 |
| Embodiment 5 | 12 | 38 | 1.47 | 8/10 | 18/30 |
| Embodiment 6 | 12 | 40 | 1.47 | 10/10 | 30/30 |
| Embodiment 7 | 12 | 70 | 1.47 | 10/10 | 30/30 |
| Embodiment 8 | 12 | 72 | 1.47 | 10/10 | 28/30 |
| Embodiment 9 | 12 | 60 | 0.13 | 10/10 | 25/30 |
| Embodiment 10 | 12 | 60 | 0.21 | 10/10 | 30/30 |
| Embodiment 11 | 12 | 60 | 2.94 | 10/10 | 30/30 |
| Embodiment 12 | 12 | 60 | 3.02 | 9/10 | 30/30 |

| | | | | | |
|---|---|---|---|---|---|
| Note: "/" in the table means absence of the data. | | | | | |

As can be seen from Table 1, the cylindrical batteries 100 in Embodiments 1 to 12 pass the cycle capacity retention rate test at a higher pass rate than the cylindrical batteries 100 in Comparative Embodiments 1 to 2. Evidently, because a part of the first blank foil portion 2111 of a cylindrical battery 100 in Embodiments 1 to 12 is bent to form a second part 2113 and H + R ≤ L₁, when the electrode assembly 20 expands in volume during charging and discharging, under the action of internal stress, the first part 2112 moves along an opposite direction of the winding direction of the electrode assembly 20, and drives the second part 2113 to move. In this way, the second part 2113 changes to a more tightly stretched state than the original state, thereby releasing at least a part of stress. This reduces the probability of tearing or strip fracture of the first electrode plate 21 caused by the accumulation of internal stress, thereby improving the lifespan of the cylindrical battery 100.

As can be seen from Table 1, the cylindrical batteries 100 in Embodiments 1 to 3 satisfy L₁ ≤ H + R + 30%π(R₁ + R₂), and therefore, the K value test pass rate is higher than that in Embodiment 4. Evidently, by defining L₁ ≤ H + R + 30%π(R₁ + R₂), this application prevents the part of the second part 2113, which is located between the first end wall 11 and the electrode assembly 20, from being excessively long, thereby reducing the risk that the second part 2113 squeezes the surface, facing the first end wall 11, of the electrode assembly 20 and consequently induces a poor K value.

As can be seen from Table 1, the cylindrical batteries 100 in Embodiment 2 and Embodiments 6 to 7 satisfy 40° ≤ α ≤ 70°, and therefore, the cylindrical batteries 100 in Embodiment 2 and Embodiments 6 to 7 pass the cycle capacity retention rate test at a pass rate higher than that in Embodiment 5. Evidently, by defining α ≥ 40°, this application ensures that α is not excessively small, and makes it convenient for the first part 2112 to drive the second part 2113 to move, thereby releasing stress and improving the lifespan of the cylindrical batteries 100. In addition, the cylindrical batteries 100 in Embodiment 2 and Embodiments 6 to 7 pass the K value test at a pass rate higher than that in Embodiment 8. Evidently, by defining α ≤ 70°, this application reduces the probability of an internal short circuit caused by insertion of a corner of an end portion of the second part 2113 into the wound structure of the electrode assembly 20, where the end portion of the second part is connected to the first end wall 11.

As can be seen from Table 1, the cylindrical batteries 100 in Embodiment 2 and Embodiments 10 to 11 satisfy 5%W ≤ d₁ ≤ 70%W, and therefore, the cylindrical batteries 100 in Embodiment 2 and Embodiments 10 to 11 pass the K value test at a higher pass rate than that in Embodiment 9. Evidently, by defining d₁ ≥ 5%W, this application ensures that the coverage length by which the second adhesive piece 40 covers the edge of the second part 2113 is not excessively short, thereby reducing the probability of the burrs on the edge of the second part 2113 piercing the separator 23, and consequently reducing the probability of a poor K value of the cylindrical batteries 100. The cylindrical batteries 100 in Embodiment 2 and Embodiments 10 to 11 pass the cycle capacity retention rate test at a higher pass rate than that in Embodiment 12. Evidently, by defining d₁ ≤ 70%W, this application reduces the probability of poor connection between the second part 2113 and the first end wall 11 caused by the presence of the first adhesive piece 30.

A person of ordinary skill in the art understands that the foregoing embodiments are merely intended to illustrate this application, but not intended to limit this application. Any and all appropriate modifications and changes made to the embodiments without departing from the essence of this application still fall within the protection scope of this application.

## Claims

1. A cylindrical battery, **characterized in that** the cylindrical battery comprises:
a housing, wherein the housing comprises a first end wall, a second end wall, and a circumferential wall; the first end wall and the second end wall are disposed opposite to each other along a first direction; and the circumferential wall connects the first end wall and the second end wall, and combines with the first end wall and the second end wall to jointly define a first space; and
an electrode assembly, wherein the electrode assembly is disposed in the first space; the electrode assembly comprises a first electrode plate, a second electrode plate, and a separator; the first electrode plate, the separator, and the second electrode plate are stacked up and then wound together to form a wound structure; a winding center axis of the electrode assembly lies in the first direction;
the first electrode plate comprises a first current collector and a first active material layer stacked up, the first current collector comprises a first blank foil portion located at an outermost turn of the wound structure of the first electrode plate, the first blank foil portion is not covered by the first active material layer, the first blank foil portion is formed of a first part and a second part, the first part extends along a winding direction of the electrode assembly, the second part comprises a terminating end of the first electrode plate, the second part is formed by bending the first blank foil portion, the terminating end of the first electrode plate is located between the first end wall and the electrode assembly, the second part is connected to the first part and the first end wall, and a region of connection between the second part and the first end wall is a first region;
a first edge is formed at a junction between the first part and the second part, the first part comprises a second edge and a third edge opposite to each other along the first direction, the second edge is closer to the first end wall than the third edge, and the first edge intersects the third edge to form a first fold point;
a distance between the first end wall and the second end wall along the first direction is H, and an inner radius of the circumferential wall is R; and
along an extension direction of the second part, a minimum distance from the first fold point to the first region is L₁, satisfying H + R ≤ L₁.

2. The cylindrical battery according to claim 1, **characterized in that** a cross-section, perpendicular to the first direction, of the electrode assembly is annular in shape, an outer radius of the electrode assembly is R₁, and an inner radius of the electrode assembly is R₂, satisfying L₁ ≤ H + R + 30%π(R₁ + R₂).

3. The cylindrical battery according to claim 2, **characterized in that** $H + R + 10 % π \left({R}_{1}+{R}_{2}\right) \leq {L}_{1} \leq H + R + 20 % π \left({R}_{1}+{R}_{2}\right) .$

4. The cylindrical battery according to any one of claims 1 to 3, **characterized in that** the cylindrical battery comprises a first adhesive piece and a second adhesive piece; both the first adhesive piece and the second adhesive piece are configured to bond the first part and the second part together; the first adhesive piece is bonded to surfaces of the first part and the second part, the surfaces facing the circumferential wall; and the second adhesive piece is bonded to surfaces of the first part and the second part, the surfaces facing the winding center axis;
the first adhesive piece covers at least a part of an edge of the first part and a part of an edge of the second part; and
the second adhesive piece covers at least a part of an edge of the first part and a part of an edge of the second part.

5. The cylindrical battery according to claim 4, **characterized in that** a projection of the second edge onto the second part along a thickness direction of the first electrode plate is a first projection line;
the first adhesive piece comprises a fourth edge, the fourth edge is disposed opposite to the first projection line along the first direction, the fourth edge is closer to the first region than the first projection line, a distance between the first projection line and the fourth edge along the extension direction of the second part is d₁, and a width of the first part along the first direction is W, satisfying 5%W ≤ d₁ ≤ 70%W; and/or
the second adhesive piece comprises a fifth edge, the fifth edge is disposed opposite to the first projection line along the first direction, the fifth edge is closer to the first region than the first projection line, a distance between the first projection line and the fifth edge along the extension direction of the second part is d₂, and a width of the first part along the first direction is W, satisfying 5%W ≤ d₂ ≤ 70%W.

6. The cylindrical battery according to any one of claims 1 to 5, **characterized in that** the second part comprises a connecting portion and an interconnecting portion , the connecting portion and the first part are an integrally formed structure, the interconnecting portion is connected to the connecting portion, the interconnecting portion is connected to the first end wall, a region of connection between the interconnecting portion and the first end wall is the first region, a region of connection between the connecting portion and the interconnecting portion is a second region, and the first region is spaced apart from the second region.

7. The cylindrical battery according to claim 6, **characterized in that** the interconnecting portion is welded to the connecting portion, the interconnecting portion is welded to the first end wall, and along the extension direction of the second part, a minimum distance between the first region and the second region is L₂, satisfying 1/5R ≤ L₂ ≤ 3/5R.

8. The cylindrical battery according to claim 6, **characterized in that** the interconnecting portion is welded to the connecting portion; the cylindrical battery further comprises a third adhesive piece; the third adhesive piece is configured to bond the connecting portion and the interconnecting portion together, and is located on one side of the connecting portion and the interconnecting portion, the side facing the wound structure; and along a thickness direction of the interconnecting portion, the third adhesive piece covers the second region, and the third adhesive piece is spaced apart from the first region; and
along the extension direction of the second part, a minimum distance between the third adhesive piece and the first region is L₃, satisfying 1/5R ≤ L₃ ≤ 2/5R.

9. The cylindrical battery according to any one of claims 1 to 8, **characterized in that**
the second part is a folded structure; after a part of the first blank foil portion is bent toward a direction that brings the terminating end of the first electrode plate closer to the first end wall, the second part comprises a sixth edge and a seventh edge opposite to each other along the winding direction of the electrode assembly; the sixth edge and the second edge are a same edge line of the first current collector;
the seventh edge and the third edge are a same edge line of the first current collector; and the folded structure is formed by bending a part of the first blank foil portion toward a direction that brings the terminating end of the first electrode plate closer to the first end wall and then folding the second part in such a way that the sixth edge is closer to the first part; and
a height of the electrode assembly along the first direction is h, satisfying h ≥ 4R/3.

10. The cylindrical battery according to claim 1, **characterized in that**
along a thickness direction of the first electrode plate, a part of the second part is located on one side of the first part, the side facing the circumferential wall; and a part of the second part is located on one side of the first part, the side facing a winding center of the electrode assembly.

11. The cylindrical battery according to any one of claims 1 to 10, **characterized in that** the second part comprises a sixth edge and a seventh edge opposite to each other along the winding direction of the electrode assembly, the sixth edge and the second edge are a same edge line of the first current collector, the seventh edge and the third edge are a same edge line of the first current collector, and an angle between the first edge and the seventh edge is α, satisfying 40° ≤ α ≤ 70°.

12. The cylindrical battery according to any one of claims 1 to 11, **characterized in that** the second electrode plate comprises a second current collector and a second active material layer stacked up, the second current collector comprises a second blank foil portion located at an outermost turn of a wound structure of the second electrode plate, the second blank foil portion is not covered by the second active material layer, the second blank foil portion is formed of a third part and a fourth part, the third part extends along the winding direction of the electrode assembly, the fourth part comprises a terminating end of the second electrode plate, the fourth part is formed by bending a part of the second blank foil portion toward a direction that brings the terminating end of the second electrode plate closer to the second end wall, the fourth part is connected to the third part and the second end wall, and a region of connection between the fourth part and the second end wall is a third region;
an eighth edge is formed at a junction between the third part and the fourth part, the third part comprises a ninth edge and a tenth edge opposite to each other along the first direction, the tenth edge is closer to the first end wall than the ninth edge, and the ninth edge intersects the eighth edge to form a second fold point; and
along an extension direction of the fourth part, a minimum distance from the second fold point to the third region is L₄, satisfying H + R ≤ L₄.

13. The cylindrical battery according to claim 1, **characterized in that** one of the first electrode plate or the second electrode plate is a negative electrode plate, and the negative electrode plate comprises a negative active material layer and a negative current collector stacked up; the negative active material layer comprises silicon; and based on a mass of the negative active material layer, a mass percent of silicon is at least 3%.

14. An electronic device, **characterized in that** the electronic device comprises the cylindrical battery according to any one of claims 1 to 13.
